# NEUE EUROPÄISCHE PATENTSCHRIFT

(11) **EP 1 679 457 B3**
(45) Veröffentlichungstag dieser Patentschrift: **01.07.2009**
(45) Hinweis auf die Patenterteilung: 07.01.2009
(21) Anmeldenummer: 06008918.2
(22) Anmeldetag: 15.06.2001
(51) Int. Cl.: F16J 15/08

(54) **Flachdichtung**
Flat gasket
Joint plat

(30) Priorität: 15.06.2000 DE 10029403; 07.12.2000 DE 10060872
(43) Veröffentlichungstag der Anmeldung: 12.07.2006
(62) Teilanmeldung aus: 01943514.8
(73) Patentinhaber: REINZ-Dichtungs-GmbH, 89233 Neu-Ulm (DE)
(72) Erfinder: Höhe, Kurt, 89129 Langenau (DE); Gütermann, Armin, 89340 Leipheim (DE); Unseld, Günther, 89189 Neenstetten (DE); Egloff, Georg, 89264 Weissenhorn (DE)
(74) Vertreter: Pfenning, Meinig & Partner GbR

(56) Entgegenhaltungen:
- EP-A- 0 268 134
- EP-A- 0 942 205
- EP-A1- 0 470 790
- EP-A1- 0 940 608
- EP-A2- 0 893 630
- DE-A1- 4 421 219
- JP-U- 7 041 137
- US-A- 4 387 904
- US-A- 4 721 315
- US-A- 4 803 965
- US-A- 5 536 024
- US-A- 5 690 343

## Beschreibung

Die Erfindung betrifft eine Flachdichtung, in der jeweils mindestens eine Durchgangsöffnung ausgebildet ist. Die mehrlagige Flachdichtung kann insbesondere als Zylinderkopfdichtung, aber auch für andere miteinander zu dichtende Flächen, wie die verschiedensten Flanschdichtungen ausgebildet und eingesetzt werden.

Zur Erhöhrung und Absicherung der Dichtwirkung einer solchen metallischen Flachdichtung über einen längeren Zeitraum ist es üblich, um die verschiedensten Durchgangsöffnungen durch entsprechende Verformung mindestens einer der Lagen einer solchen Flachdichtung eine Sicke, die diese Durchgangsöffnung in der Regel vollständig umschließt, auszubilden.

Eine solche Sicke kann die Funktion jedoch nur so lange erfüllen, wie ein gewisses Maß an Elastizität im Sickenbereich erhalten bleibt, was in der Regel ohne zusätzliche Hilfsmittel, mit denen eine vollständige plastische Verformung verhinden wird, nicht eingehalten werden kann. Hierfür werden üblicherweise Verformungsbegrenzer für die Sicken eingesetzt. Solche Verformungsbegrenzer sind in den verschiedansten Ausführungsformen bekannt und werden üblicherweise auch als. "Stopper" bezeichnet. So können Verformungsbegrenzer durch Umbiegen einer der metallischen Lagen oder von zusätzlichen Elementen erhalten werden.

In der DE 298 04 534 U ist ein Beispiel eines solchen Verformungsbegrenzers in Form eines rillierten Bereiches, der in einer metallischen Lage ausgeformt ist, beschrieben. Eine solche Rillierung wird durch Kalt- oder Heißverformung in der metallischen Lage erzeugt. Die Rillierung ist dabei in Bezug zu Dicke der metallischen Lage bzw. auch unter Berücksichtigung bestimmter Einbaubedingungen einer solchen Dichtung, so dimensioniert, dass der rillierte Bereich eine entsprechende Dikkenzunahme darstellt.

Mit einer solchen Rillierung als Verformungsbegrenzer ist jedoch nur eine begrenzte Einflußnahme auf gewünschte Eigenschaften erreichbar und insbesondere die Variation mit entsprechender Anpassung an die unterschiedlichsten Einsatzbedingungen, die auch an einer Flachdichtung lokal unterschiedlich sein können, ist nur bedingt und in eingeschränkter Form möglich.

Bei jedem der geeigneten Herstellungsverfahren tritt eine Veränderung das Metalls in diesem Bereich auf, unabhängig davon, ob eine Kalt-bzw. eine Heißverformung durchgeführt werden ist, was zumindest bei der Auswahl und Gestaltung des Flachmaterials für solche Flachdichtungen berücksichtigt werden muss.

Insbesondere bei der Ausbildung einer solchen Rillierung durch Pressen in das kalte Metall, tritt ein entsprechender Verschleiß am Presswerkzeug auf, so dass die kostenintensiven Werkzeuge in mehr oder weniger großen Abständen ausgetauscht werden müssen.

Außerdem können die Rillien nicht beliebig tief und mit beliebiger Dichte reproduzierbar in die metallische Lage eingebracht werden.

Die JP 7-41137 U offenbart eine zweilagige Zylinderkopfdichtung, die in einer ihrer Lagen eine den Brannraum umlaufende Sicke aufweist. In einer hierzu benachbarten Lage ist ein Verformungsbegrenzer für diese Sicke vorgesehen. Der Verformungsbegrenzer weist eine Beschichtung auf, die zu einer Überhöhung der Lage führt. Zusätzlich ist diese Beschichtung in eine wellenförmige Profilierung eingebeitet, die das Ablösen und den Verlust der Beschichtung verhindert.

Es ist daher Aufgabe der Erfindung, eine Flachdichtung zur Verfügung zu steilen, die an lokal auftretende Einflüsse besser angepaßt und die koslengüngstig hergestellt werden kann.

Erfindungsgemäß wird diese Aufgabe durch eine Flachdichtung nach Anspruch 1 gelöst. Vorteilhafte Ausgestaltungsformen und Weiterbildung der Erfindung ergeben sich mit den in den untergeordneten Ansprüchchen enthaltenen Merkmalen.

Bei der erfindungsgemäßen Flachdichtung, die aus mehreren übereinander angeordneten metallischen Lagen besteht, wird im Gegensatz zur bereits erwähnten, bekannten Rillierung in zumindest einer der metallischen Lagen eine Profilierung zumindest bereichsweise um die eine oder auch mehrere Durchgangsöffnungen, insbesondere bei Durchgangsöffnungen für Brennräume in Zylinderkopfdichtungen, eingesetzt. Dabei kann eine solche Profilierung in Wellenform ausgebildet werden, indem diese Form in die jeweillige metallische Lage eingeprägt wird.

Der Begriff Welle bei der vorliegenden Erfindung umfasst auch Ausführungsformen, die von einer sinusförmigen Welle abweichen. Die Welle kann demnach auch in den Bergen und Tälern abgeflacht sein und z.B. gerade Flanken aufweisen. Unter dem Begriff Welle der vorliegenden Erfindung fallen auch trapezförmige Ausgestaltungen. Die Welle nach der Erfindung weist dabei eine Periodenlänge ≥ 1,5 auf.

Die Profillierung ist dabei zumindest bereichsweise um die Durchgangsöffnung(en) herum, möglichst deren Außenkontur angepaßt, ausgebildet. Eine derartige Profilierung weist drei und mehr Wellenberge bzw. drei und mehr Zähne auf jeder Seite der Dichtung auf. In diesem Falle wird ein gutes Dichtverhalten auch ohne Füllung oder Beschichtung der Profilierung erzielt.

Erfindungsgemäß können jedoch die jeweiligen Wellenbarge bzw. Wellentäler auch abgeflacht bzw. abgeplattet sein, wodurch sich eine besonders wirksame Auflagefläche des Stoppers auf die benachbarten Dichtungsfagen ausbildet. Vorteilhafterweise sind die Höhen der Wellenberge, d.h. die Amplitude, nicht unbedingt über die gesamte Profilierung konstant, sondern können in bestimmten Umfangsbereichen um eine Durchgangsöffnung, unter Berücksichtigung der jeweilligen geometrischen Gestalt, unterschiedlich groß sein. In gleicher Weise können auch die Abstände von Wellenbergen zueinander variiert werden.

Auch können unterschiedliche Amplituden der Wellenberge und/oder unterschiedliche Abstände zwischen den einzeinen Wallenbergen sowie unterschiedliche Radien der Wellen, ausgehend mit wachsendem Abstand vom Rand der jeweiligen Durchgangsöffnung eingestellt werden, um insbesondere die Elastizität und die Federsteife gezielt lokal beeinflussen zu können. Dabei kann auch definiert eine plastische Verformung eines Bereiches einer solchen Profilierung zugelassen bzw. bereits vor dem Einbau einer solchen Flachdichtung vorgenommen werden.

Weiterhin weist erfindungsgemäß der Übergangsbereich zwischen Wellentälern und Wellenbergen eine geringere Materialdicke als die Wellenberge/-täler auf. Durch geeignete Prägung beim Herstellen der Profilierung (Flankenstauchung) läßt sich so auch die Materialdicke profilieren und die Eigenschaften der Profilierung an die jeweiligen spezifischen Bedingungen anpassen.

Es kann bereits genügen, eine Profilierung um die Durchgangsöffnungen auszubilden, deren Periodenlänge ≥ 1,5 ist. Dies bedeutet, dass eine größere Anzahl von Wellenbergen, drei oder mehr, eingesetzt werden.

Die Profilierung wird als Verformungsbegrenzer für zusätzlich ausgebildete Sicken eingesetz.

Erfindungsgemäß wird die Profilierung bei einer Mehrlagendichtung in einer Lage und die Sicke in einer benachbarten Lage ausgebildet werden.

Erfindungsgemäß kann eine Flachdichtung auch aus mindestens zwei Metallagen bestehen, die beide eine wellenförmige Profilierung aufweisen. Diese Profilierungen können übereinander zu liegen kommen. Vorteilhafterweise sind die Profilierungen in der beiden Lagen unterschiedlich ausgelegt bezüglich der Länge, der Tiefe und/oder des Radius der jeweiligen Welle (Amplitude, Profilhöhe und Radius). Werden derartig zwei unterschiedlich ausgelegte Wellensicken direkt miteinander in Berührung im Motor auf Pressung gebracht, so ist die Relativbewegung jeder der Wellensicken abhängig von der jeweiligen Wellenstruktur.

Die Differenz der Relativbewegung der beiden Profilierungen kann zur Abdichtung als elastisches Federelement mit einer hohen Spannkraft verwendet werden. So kann in einem der Bleche die Vollsicke eingespart werden und den noch die Spannkraft einer Vollsicke übertroffen werden.

Weiterhin kann die Lage, die die Profilierung aufweist, im Bereich der Profilierung durch mindestens eine weitere Lage, z.B. einen Ring, vorteilhafterweise mit der Breite der Profilierung, verstärkt sein. Diese Lage oder dieser Ring kann die profilierte Lage auch längs des Umfangsrandes der Durchgangssöffnung zumindest bereichsweise umgreifen und dort einen sogenannten Falzstopper bilden. Die Verstärkungslage bzw. der Verstärkungsring kann dieselbe Profilierung aufweisen, und folglich können beide Profilierungen formschlüssig aneinander anliegen. Auch hier kann jedoch die Amplitude. Periode und Radius der Profilierung der Verstärtungslage bzw. des Verstärkungsringes längs des Umfangsrandes und/oder senkrecht zum Umfangsrand der Durchgangsöffnung variiert werden. Unterscheiden sich Periode, Amplitude und Radius auf verschiedenen Lagen angeordneter, banachbarter Profilierung voneinander, so kann das Dichtverhalten auf diese Weise weiter gezielt beeinflußt werden.

Der Stopper (Lage oder Ring) kann mittels frei wählbarer Schweißverfahren mit dem Wellenstopper verbunden werden. Durch diesen aufgeschweißten Stopper wird ein variabler Überstand erzielt, der gleichzeitig einen elastischen Anteil enthält. Die Wahl der Dicke des zusätzlichen Stoppers ermöglicht es, die Dichtung im Stopperbereich auf die Motorgegebenheiten abzustimmen. So können sehr hohe und robuste Konstruktionen erreicht werden, beispielsweise für Dieselmotoren auch im Lastkraftwagenbereich.

Im Gegensatz zu herkömmlichen Flachdichtungen mit Verformungsbegrenzem wird auf ein Umbiegen bzw. Umbördeln von Lagen der Flachdichtung oder zusätzlichen Elementen zur Herstellung von Verformungsbegrenzen verzichtet und demzufolge die Herstellungskosten reduziert.

Die Profilierung einer oder mehrerer Lagen kann auch durch entsprechende Gestaltung und Dimensionierung nahezu optimiert werden, indem die Elastizität, die Federsteife und auch ein gezielt gewünschtes Maß an plasticher Verformung in den unterschiedlichen Bereichen einer solchen Profilierung eingestellt werden können. So ist es möglich, wie bereits eingangs angedeutet, die Abstände der einzelnen Wellenberge voneinander und/oder deren Höhen und/oder die Radien der einzeinen Wellen entsprechend zu variieren. Es kann beispielsweise auch der in Richtung auf eine Durchgangsöffnung weisende Bereich einer Profilierung kleinere Abstände der Wellenberge voneinander aufweisen, als die weiter entfernten Bereiche. In dem erstgenannten Bereich ist demzufolge die Elastizität kleiner als in den verdichteten Bereichen einer solchen Profilierung. Die Abstände und/oder Höhen können aber auch, ausgehend vorn äußeren Rand einer Durchgangsöffnung sukzessive vergrößert sein.

Die verdichteten Bereiche einer Profilierung weben eine geringene Elastizität auf und sind im Gegensatz dazu begrenzt plastisch verformbar und dieser Bereich kann dementsprechend gegebenenfalls die Funktion eines Verformungsbegrenzers mit übernehmen.

Weiterhin kann auch längs des Umfangs der Durchgangsöffnung, beispielsweise einer Zylinderbohrung, ein Variation der Zahl der Wellenberge bzw. Täler, der Blechdicke, der Höhen oder Form, insbesondere der Radian der Wellenberge/-täler sowie deren Abstand und dergleichen erfolgen.

Die Metalllagen, in der die Profilierung eingebracht ist, kann auch bezüglich ihrer Ober- und Unterseite, d.h. der beiden Seiten, die in eingebautern Zustand beispielsweise den Zylinderkopf bzw. den Zylinderblock zugewandt sind, unterschiedlich gestaltet werden, z.B. bzgl. der Höhe und Form der Wellenberge/- täler und dergleichen, so daß der Stopper den unterschiedlichen Eigenschaften von beispielsweise Zylinderkopf und Zylinderblock, die aus unterschiedlichen Materiallen gefertigt sein können, gerecht werden kann.

Die Lage, die die Profilierung aufweist, kann weiterhin aus kaltverformbarem Stahl geformt werden, beispielweise einem Martensit-aushärtenden Stahl wie Zapp VACL 180T, der durch Temperierung, beispielsweise auf 300°C, aushärtet.

Die Steifigkeit bestimmter Bereiche einer Profilierung kann auch mittels Stegen, die zwischen den einzeinen benachbarten Wellenbergen angeordnet und ausgebildet sind, erhöht werden. Solche Stege können in einer Reihen-, aber auch in versetzter Anordnung eingesetzt werden. Die Stege können aber auch lediglich in einem Bereich, der in einem größeren Abstand von der jeweiligen Durchgangsöffnung angeordnet ist, vorhanden sein.

Die erfindungsgemäß einzusetzende Profilierung kann in den verschiedensten metallischen Materialien, also auch in verschiedenen Federstahlmateriallen ausgebildet werden, wobei mit Federstahl eine noch höhere Elastizität und demzufolge eine Verbesserung der Dichtwirkung über einen langen Zeitraum erreicht werden kann.

Die erfindungsgemäße Flachdichtung kann zusätzlich weitergebildet werden, indem an sich bekannte Stoffe auf zumindest eine Seite einer metallischen Lage aufgebracht werden. Geeignete Stoffe, beispielsweise Elastomere, sind beispielsweise in DE 198 29 058, DE 199 28 580 und DE 199 28 601 genannt, auf deren Offenbanungsgehalt vollumfänglich zurückgegriffen wird.

Ein solcher Füllstoff ist dann zumindest auch in Bereichen und Teilen der Profilierung vorhanden und die Elastizität und Federstelfigkeit kann mit Hilfe des jeweiligen Elastomers beeinflußt werden. Eine weitere Einflußgröße, bei Verwendung solcher Füllstoffe, ist naben deren Anordnung auch der jeweilige Füllgrad in der Profilierung. Dies bedeutet, dass die Wellentäler einer solchen Profilierung vollständig, aber auch teilweise gefüllt sein können, so dass neben der bereits erwähnten lokalen Einflußnahme auf Elastizität und Federsteifigkeit auch die Dämpfungseiganschaften in unterschliedlicher Form beeinflußbar sind.

Der Füllgrad kann mit wachsendem Abstand vorn Rand der Durchgangsöffnungen verändert werden. Er kann aber auch über den Umfang der jeweiligen Durchgangsöffnungen variiert werden.

Die erfindungsgemäßen Flachdichtungen können unabhängig davon, ob sie mit oder ohne zusätzlichen Füllstoff hergestellt werden sollen, mit wenigen technologisch, einfach beherrschbaren Arbeitsschritten und demzufolge besonders kostengünstig hergestellt werden.

Durch die unterschiedlichsten Möglichkeiten auf die Gestaltung und Dimensionierung der Profilierung, können Eigenschaften lokal gezielt eingestellt werden.

Bei den erfindungsgemäßen Flachdichtungen tritt kein lokales Aufhärten im Metall auf. Außerdem ist ein verringerter Verzug erreichbar. Die Profilierungen können auch bei harten Federstärken ausgebildet werden.

Nachfolgend soll die Erfindung anhand von Beispielen näher erläutert werden.

Dabei zeigen:
- Figur 1: eine Schnittdarstellung, durch einen Teile einer Flachdichtung, bei der eine wellenförmige Profilierung, einen Verformungsbegrenzer für eine herkömmliche Sikke bildet;
- Figur 2: einen Teil einer Dreilagenflachdichtung, mit zwei außenliegenden gesickten Lagen und
- Figur 3: einen Teil eines weiteren Beispiels einer Flachdichtung, mit variabel gestalteter Profilierung;
- Figur 4: ein weiteres Beispiel einer Flachdichtung;
- Figur 5: vier weitere Beispiele von Flachdichtungen;
- Figur 6: Insgesamt acht weitere Beispiele für Flachdichtungen; und
- Figur 7: vier weitere Beispiele für Flachdichtungen; und
- Fig. 8: eine Ausführungsform, bei der die Profilierung als Trapez ausgebildet ist.

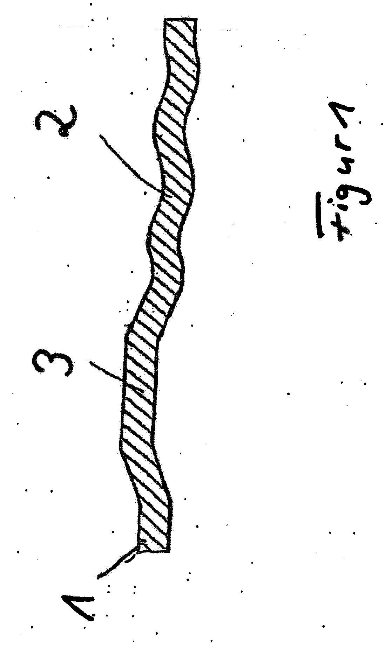

Figur 1 zeigt ein Beispiel einer einlagigen Flachdichtung. Bei diesem einlagigen Beispiel handelt es sich nicht um ein Ausführungsbeispiel der vorliegenden Erfindung, es dient jedoch der Erläuterung einzeiner Aspekte der vorliegenden Erfindung, etwa der Anordnung einer Sicke und einer wellenförmigen Profilierung in einer Lage einer mehrlagigen Dichtung.

Bei dem in Figur 1 gezeigten Beispiel einer einlagigen Flachdichtung ist in der metallischen Lage 1 eine Sicke 3 ausgeformt und in Richtung auf eine hier nicht dargestellte Durchgangsöffnung schließt sich eine wellenförmige Profilierung 2 an, deren Wellenberge und Wellentäler regelmäßig angeordnet und demzufolge auch die Wellenberge eine konstante Profilhöhe und konstante Abstände zueinander aufweisen. Die Profilierung 2 erfüllt in diesem Fall neben der Funktion eines Verformungsbegrenzers für die Sicke 3 auch zusätzlich durch die erreichbaren elastischen Eigenschaften Abdichtfunktion.

Hier wie bei der Beschreibung der folgenden Figuren werden für entsprechende Elemente entsprechende Bezugszeichen verwendet.

In nicht dargestellter Form kann die Federcharakteristik und demzufolge auch die Elastizität durch Ausfüllen der Zwischenräume zwischen den benachbarten Wellenbergen der Profilierung 2, z.B. mit Elastomer und mit unterschiedlichem Füllgrad beeinflußt werden. Seibstverständlich können auch die Zwischenräume zwischen den Wellenbergen vollständig mit einem Elastomer ausgefüllt sein.

In nicht dargestellter Form kann eine entsprechende Profilierung 2 auch auf der anderen Seite der Sicke 3 ausgebildet sein.

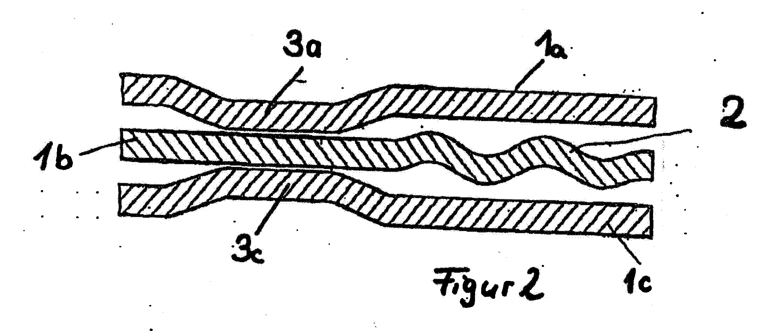

Figur 2 zeigt ein Beispiel einer dreilagigen Flachdichtung, dem die Flankenverfüngung schematisch entnommen werden kann. Bei diesem Beispiel sind in den beiden außen liegenden Lagen 1' der Flachdichtung wieder Sicken 3 ausgeformt und eine ebenfalls wellenförmige Profilierung 2 ist entsprechend in der mittleren Lage 1 vorhanden. Selbstverständlich treffen die Aussagen zu Möglichkeiten der Beeinflussung von Eigenschaften, die bereits zu Figur 1 gemacht worden sind, auch auf dieses Beispiel sinngemäß zu.

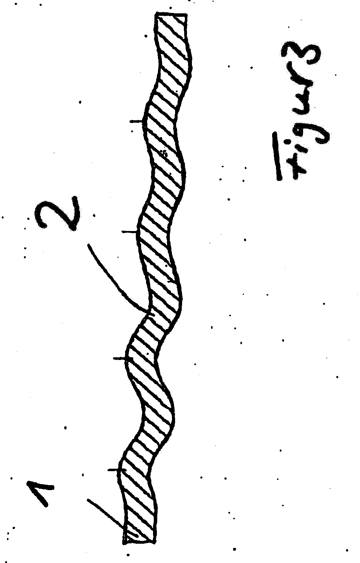

Figur 3 zeigt ein Beispiel einer einlagigen Flachdichtung. Bei diesem einlagigen Beispiel handelt es sich nicht um ein Ausführungsbeispiel der vorliegenden Erfindung, es dient jedoch der Erläuterung einzeiner Aspekts der vorliegenden Erfindung, etwa der Anordnung einer wellenförmigen Profilierung in einer Lage einer mehrlagigen Dichtung, wobei in dieser Lage auf die Ausbildung einer Sicke verzichtet worden ist. Beim gezeigten Beispiel sind die Abstände und Profilhöhen der einzelnen Wellenberge der Profilierung 2, in einem Bereich nahe des hier nicht gezeigten Randes einer Durchgangsöffnung kleiner, als dies in den Bereichen der Profilierung 2 mit größeren Abstand zur Durchgangsöffnung der Fall ist. Die entsprechend näher liegenden Bereiche sind steiter und können, wenn überhaupt, nur geringfügig plastich verformt werden.

Der Bereich, der weiter von der Durchgangsöffnung entfernt ist, weist eine größere Periodenlänge auf, die Abstände der Wellenberge voneinander sind entsprechend größer, wobei letzteres auch auf die Profilhöhe der Wellenberge in diesem Bereich zutrifft. Demzufolge ist in diesem Bereich der Profilierung 2 eine höhere Elastizität und geringere Steifigkeit vorhanden. Im eingebauten, d.h. vorgespannten Zustand einer solchen Flachdichtung kann dann der Bereich der Profilierung 2 mit dem größeren Abstand von der Durchgangsöffnung durch die erwähnten Eigenschaften Verformungsbegrenzerfunktion für den davor liegenden Bereich der Profilierung 2 erfüllen.

Die Profilierung kann in ihner Gestalt durch verwendung eines entsprechend gestalteten und dimensionierten Prägewerkzeuges bereits bei der Ausformung erhalten werden. Es besteht eber die Möglichkeit, eine solche Gestaltung dieses Bereiches in einem zweiten technologischen Arbeitsschritt durch entsprechendes Stauchen und Drücken herzustellen.

Vorteilhaft ist es, wenn die vorab erhaltene Profilierung 2 nachfolgend vollständig oder bereichsweise planiert wird, so dass im planierten Bereich die Profilhöhe wieder reduziert wird. Hierzu können ein oder zwei Stempel mit einer ebenen parallel oder in einem Winkelschräg zur Oberfläche der metallischen Lage 1 ausgerichteten Pressflächen auf den zu planierenden Bereich gepresst werden. Beim Planieren sollte die metallische Lage 1, Insbesondere an den Rändern der Profilierung 2 verspannt werden. Durch das nachfolgend durchgeführts Planieren kann die Steifigkeil und die Härte der Profilierung 2 erhöht und demzufolge auch die Standfestigkeit einer erfindungsgemäßen Flachdichtung verbessert werden.

Da bei den in den Figuren 1 bis 3 gezeigten Beispielen von Flachdichtungen, durch die Wahl von Schnittdarstellungen darstellerische Grenzen gesetzt sind, soll darauf hingewiesen werden, dass die Profilierung über den Umfang gesehen, d.h. in verschiedenen radialen Achsen unterschiedlich gestaltet und dimensioniert sein kann. So besteht die Möglichkeit, die Anzahl der hintereinankler angeordneten Wellenberge über den Umfang zu variieren und/oder eine entsprechende Veränderung der Abständs und Profilhöhen der Profilierung vorzunehmen.

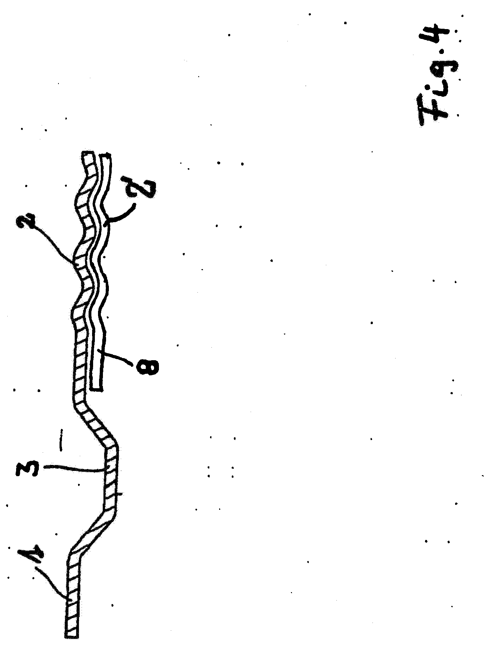

Figur 4 zeigt ein weiteres Beispiel einer Flachdichlung mit einer einzeinen Metalllage 1, in die eine Sikke 3 eingeprägt ist Es handelt sich hierbei nicht um ein Ausführungsbeispiel der Erfindung, da diese Flachdichtung aus einer einzelnen Metallage 1 und einem Ring 8, statt zumindest aus zwei metallischen Lagen besteht. Zwischen der Sicke 3 und der rechter Hand liegenden Durchgangsöffnung ist ein wellenförmiger Stopperbereich 2 angeordnet. Dieser weist insgesamt drei Wallenberge und Wellentäler auf. Unterhalb dieses Stopperbereiches ist längs des Umfangsrandes der Durchgangsöffnung ein Ring 8 aufgeschweißt, der dieselbe Profilierung wie die Metalliage 1 aufweist und an dieser formschlüssig anliegt. In dem Ring 8 ist folglich ebenfalls eine Profilierung 2' mit drei Wellenbergen und drei Weilentätern ausgebildet. Mit einem derartigen zusätzlichen Stopperring 8 kann die erfindungsgemäße Flachdichtung an variable Motorgeometrien bzw. Motorverhältnisse angepaßt werden, in denen sowohl die Breite wie die Materialdicke des Metallringes 8 dementsprechend gewählt werden.

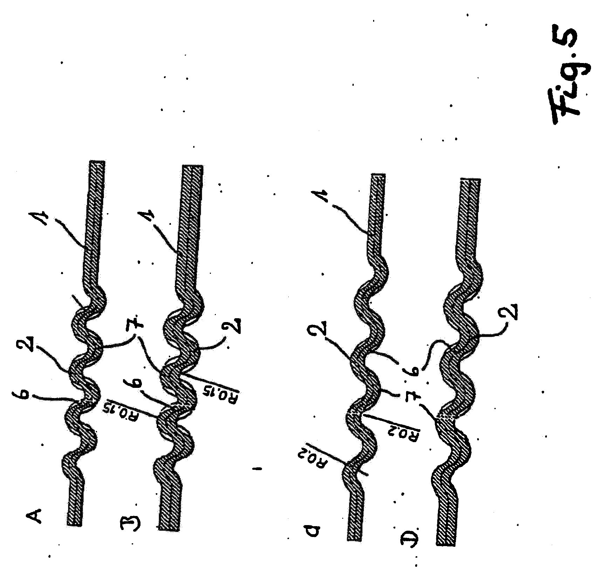

Figur 5 zeigt Ausschnitts aus vier weiteren Flachdichtungen. Erfindungsgemäß sind die jeweils dargestellten einzeinen Lagen Bestandteil einer Mehrlagendichtung. Insbesonders zeigen alle diese Ausschnittszeichungen Profilierungen mit einer Flankenverjüngung entsprechend dem kennzeichnenden Merkmal des Anspuchs 1.

Die gezeigten Flachdichtungen in Figur 5A und 5C besitzen dieselbe Materialstärke, während die in den Figuren 5B und 5D gezeigten Flachdichtungen eine größere Lagendicke aufweisen. Demgegenüber besitzen die Wellen in dem Stopperbereich 2 in den Figuren 5A und 5B einen kleineren Krümmungsradius als bei den Flachdichtungen in Figuren 5C und 5D. Hier ist gezeigt, daß mittels unterschiedlicher Material dicke der Lage als auch mittels unterschiedlicher Ausformung der profilierten Bereiche 2 der Lage 1 ein großer Spieiraum für Anpassungsmöglichkeiten dieses Stoppers 2 an verschiedene Motorcharakteristiks gegeben sind.

Weiterhin ist bei sämlichen in Figur 5 dargesteilten profilierten Bereichen 2 jeweils die Materialstärke in einem Zwischenbereich 8 zwischen einem Wellenberg 7 und einem benachbarten Wallental 7 geringer als im Bereich der Wellentäler bzw. Wellenberge 7. Auch hierdurch kann das elastische Verhalten der Stopperbereiche 2 variiert werden.

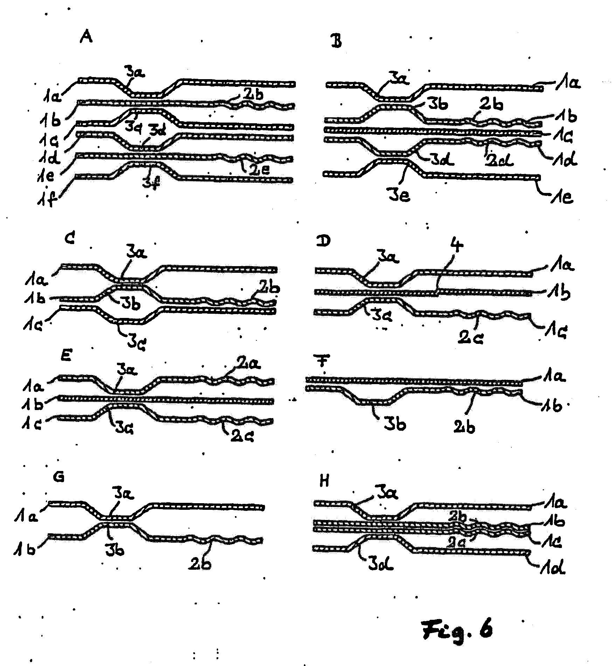

Figur 6 zeigt insgesamt acht verschiedene Varianten Flachdichtungen. Figuren 6E und 6F zeigen dabei Beispiele einer Flachdichtung, bei denen es sich nicht um Ausführungsbeispiele der vorliegenden Erfindung handeit, insofern in Fig. 6E die wellenförmigen Profilierungen keine eindeutige Stopperfunktion für eine Sicke in einer benachbarten Lage aufweist und Fig. 6F eine einlagige Dichtung darstellt. Diese Beispiele dienen je doch der Erläuterung einzeiner Aspekte der vorliegenden Erfindung und zeigen beispleilhaft Möglichkeiten der Anordnung von Sicke und Profilierung in einer Flachdichtung.

Figur 6A zeigt eine insgesamt sechslagige Flachdichtung aus sechs Metallagen 1a bis 1f. In der Lage 1b und der Lage 1e sind jeweils zwei erfindungsgemäße profilierte Stopperbereiche 2b bzw. 2e ausgebildet, die als Verformungsbegranzer für die in den Lagen 1a, 1c, 1d und 1f ausgebildeten Sicken 3a, 3c, 3d bzw. 3f dienen.

In Figur 6B ist eine entsprechende fünflagige Dichtung dargesteilt, bei der wiederum zwei Lagen mit profilierten Stopperbereichen versehen sind. In diesem Falle ist zwischen die beiden oberen Lagen 1a und 1b und die beiden unteren Lagen 1d und 1e eine Zwischenlage 1c eingefügt, die weder eine Sicke aufweist noch profiliert ist.

In Figuren 6C bis 6E sind dreilagige Flachdichtungen dargestellt, wobei in Figur 6D die Zwischenlage 1b eine Stufe 4 aufweist. Der Stufe 4 auf einer Seite benachbart ist ein profilierter Stopperbereich 2c, der als Stopper für die Sicke 3c fungiert. Dadurch daß in der Lage 1b ein Versatz vorgesehen ist, der dem Stopperbereich 2c abgewandt ist, wird die elastische Stopperfunktion des profilierten Bereiches 2c über die im profilierten der Lage 1c versetzte Lage 1b auch für die Sicke 3a in der Lage 1a genutzt. Figuren 6F und 6G zeigen zweilagige Flachdichtungen, bei denen in je einer der Dichtungslagen ein profilierter Bereich 2b ausgebildet ist. Dieser dient als Stopper (Verformungsbegrenzer) für die Sicken 3b in Figur 6F bzw. die Sicken 3a und 3b in Figur 6G.

Figur 6H zeigt wiederum eine vierlagige Flachdichtung, wobei in den beiden äußeren Lagen 1a und 1d je eine einander zugewandte Sicke 3a und 3d ausgebildet ist. Diese beiden äußeren Lagen 1a und 1d schileßen zwei weitere Lagen 1b und 1c ein, die keine Sicke aufweisen. Sie besitzen jedoch seitlich benachbart zu den Sicken 3a und 3d gewählte Bereiche 2b und 2c, die dieselbe Profilierung aufweisen und formschlüssig aneinander liegen. Diese beiden Lagen 1b und 1c bilden durch die parallel verlaufenden profilierten Bereiche 2b und 2c in dem profilierten Bereich einen Stopper (Verformungsbegrenzer) für die Sicken 3a und 3d. Durch diese Anordnung zweier paralleler profilierter Bereiche kann die Dichtwirkung und die Verformungsbegrenzung an die jewelligen Gegebenheiten des abzudichtenden Motors angepaßt werden.

Werden alternativ in der Dichtung gemäß Fig. 6H für die beiden Lagen 1b und 1c im Bereich der weilerförmigen Profilierungen 2b und 2c unterschiedliche Längen, Tiefen und/oder ein unterschiedlicher Radius der Wellen in den beiden Profilierungen verwendet, so ist die gestreckte Länge der beiden Profilierungen bei Verpressung im Motor für die beiden Lagen 1b und 1c unterschiedlich. Diese Differenz der Relativbewegung führt zu schmalen, ringförmigen Berührungen zwischen diesen beiden Profilierungen 2b und 2c. Eine derartige Anordnung kann zur Abdichtung als elastisches Federelement mit einer hohen Spannkraft, die die Spannkraft einer Vollsicke übertreffen kann, verwendet werden. In diesem Falle kann auch eine rein zweilägige Dichtung eingesetzt werden, wobei von den vier Dichtungslagen in Fig. 6H lediglich die beiden Dichtungslagen 1b und 1c zusammen die Dichtung bilden.

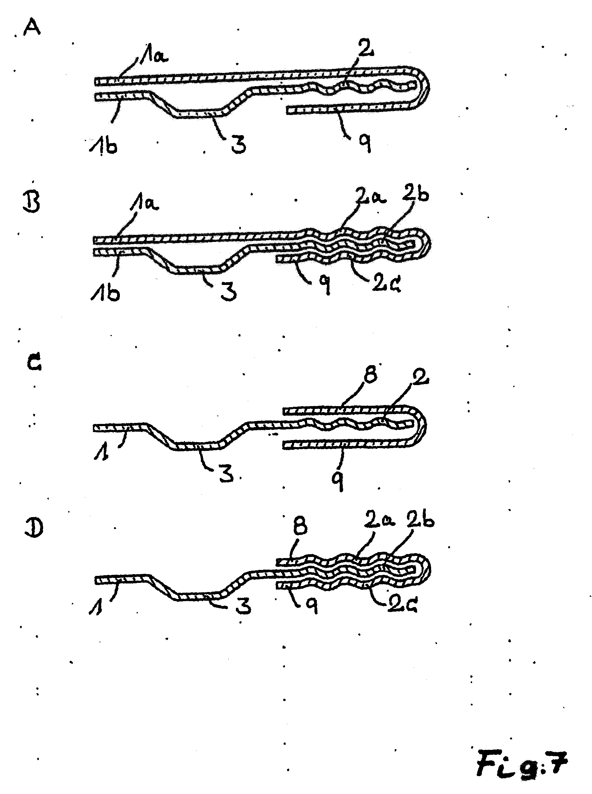

Figur 7 zeigt Beispiele einer Flachdichtung. Bei den Beispleten 7A, 7C und 7D handelt es sich jedoch nicht um Ausführungsbeispiele der vorliegenden Erfindung, insofern diese Beispiele keine wellenförmige Profilierung in einer zur ersten metallischen Lage, in die Sicke angeordnet ist, parallelen Lage ausweisen. Beim Beispiel 7B handelt es sich nicht um eine Ausführungsform der Erfindung, insofern zwar der letztgenannte Punkt anfüllt ist, die Profilierung 2a aber zu 2c umgefalzt ist. Diese Beispiele dienen jedoch der Erläuterung einzeiner Aspekte der vorliegenden Erfindung.

Fig. 7A zeigt dabei dabei eine Flachdichtung die zwei metallische Lagen 1a, 1b aufweist. Die Lage 1b ist mit einer Sicke 3 verschen, an die sich unmittelbar zu der Durchführungsöffnung benachbart ein profilierter Bereich 2 anschließt. Die der Lage 1b benachbarte Lage 1a ist nicht profiliert, umgreift jedoch die Lage 1b längs des Umfängsrandes der Durchfürungsöffnung und bildet so auf der entgegengesetzten Lage 1b einen Stopperring 9 aus. Damit ergibt die verformungsbegrenzende Stopperwirkung aus dem Zusammenwirken der Profilierung 2 mit dem Stopper 9.

In Fig. 7B ist eine entsprechende zweilagige Flachdichtung wie in Fig. 7A dargestellt. Die dem profillierten Bereich, hier mit 2B bezeichnet, der Lage 1b unmittelbar benachbarten Bereichs der Lags 1A sind in gleicher Weise einer profilierung 2a bzw. 2c versehen, so daß die Lage 1a beidseitig an den profilierten Bereich 2B der Lage 1b fomschlüssig anliegt.

Fig. 7C zeigt eine Anordnung wie in Fig. 7A, wobei jedoch die Lage 1a nicht als ganzflächige metallische Lage, sondern als Stopperring 8 lediglich im Bereich der Profilierung 2 der metallischen Lage 1 vorgesehen ist Wiederum umgreift der Stopper 8 die Lage 1 längs das Umfangsrandes der Durchführungsöffnung und bildet einen zweiten Stopper 9 aus. Es handelt sich folglich um einen gafalzten Stopper.

In Fig.7D ist in entsprechender Weise Zu Fig. 7C ein gefalzter Stopperring 8, 9 dargestellt, wobei jedoch die der Profilierung, hier mit 2B bezeichnet, der Lage 1 unmittelbar benachbarten Bereiche 2A bzw. 2C des Stopper 8, 9 ebenfalls in gleicher Weise wie die Lage 1 im Profillerungsbereich 2b profiliert sind und so formschlüssig beidseitig an die Profilierung 2b anliegen. Auch hier handelt es sich folglich um einen profilierten gefalzten Stopper.

In weiteren Beispielen kann nicht nur innerhalb der Profilierung 2b sowohl die Amplitude als auch der Abstand der einzeinen Wellenberge variiert werden, entweder längs des Umfangsrandes der Durchgangsöffnung oder auch in senkerchter Richtung zum Umfangsrand der Durchgangsöffnung, sondern auch die profilierten Bereiche 2A und 2C können in gleicher Weise eine Profilierung mit unterschiedlichen Amplituden und Wellenabständen aufweisen. Insbesondere Wellenberge zwischen den einzeinen Lagen können an benachbarten Stellen voneinandar abweichen. So können die Profilierung 2a und 2c in den Fig. 7B und 7D an jeweils zu der Profilierung 2b benachbarten Punkten von dieser verschiedene Wellenberghöhen bzw. Wellenbergabstände aufweisen. Durch entsprechende Wahl der Amplituden und Perioden der Profilierung in den einzeinen Lagen und Stopperingen ist eine gezielte Beeinflussung der Verformungsbegrenzung und der elastischen Elgenschaftan der Flachdichtung unmittelbar benachbart zu der Durchgangsöffnung möglich.

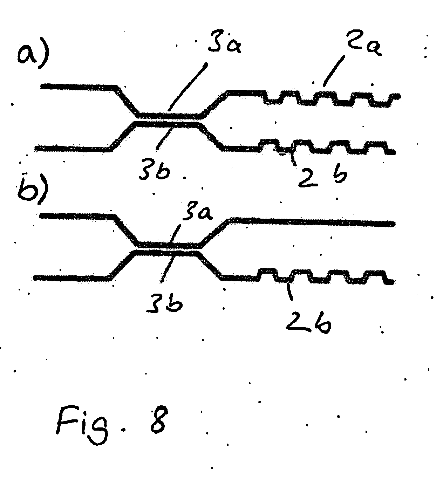

Die Figur 8a zeigt eine Zweilagendichtung, wobei jede der beiden Lagen eine Identische Profilierung 2a, 2b aufweist. Dagegen ist auch eine Ausführungsform möglich, bei der nur eine der beiden aktiven Lagen - wie hier in Figur 8b die untere Lage-die Profilierung gemäß der Erfindung zeigt. Wesentlich bei den Ausführungsformen nach den Figuren 8a und 8b ist, dass sich die Profilierung 2 in ihrer Amplitude, d.h. in der Profilhöhe, und der Abstand der Wellenberge zueinander (Periode) deutlich von der Profilierung der Sicke 3 unterscheiden. Die Profilierung 2 ist danach die Hälfte oder weniger als die der Sicke 3.

Welche der entsprechenden Ausgestaltungen gewählt werden, hängt vom Jeweiligen Einsatzzweck, d.h. von den Gegebenheiten ab, für die die Dichtung vorgesehen ist.

Ein besonderer Vorteil der Beispiele nach der Figur 8 ist darin zu sehen, daß durch die Abflachung der Wellenberge und Wellentäler, d.h. durch die Ausbildung eines Trapezes für die Profilierung bessene Dichtverhältnisse erreicht werden, die offensichtlich darauf zurückzuführen sind, daß diese Ausführungsform zu deutlich verminderten Eingrabungen kopf- und/oder blocksellig am Zylinder fürht.

## Patentansprüche

1. Flachdichtung mit mindestens einer ersten metallischen Lage, in der mindestens eine Durchgangsöffnung ausgebildet ist,
einer weiteren zu der ersten metallischen Lage (1) benachbarten metallischen Lage (1'), in der mindestens (3) eine Durchgangsöffnung und mindestens eine Sicke (3) um die Dunchgangsöffnung ausgebildet ist,
wobei die erste metallische Lage (1) seibst zumindest bereichsweise an einer Seite in Lagenebene benachbart zu der weiteren matallischen Lage (1') angeordneten Sicke in Form einer wellenförmigen Profilierung (2) mit der Periodenlänge ≥ 1,5 um die Durchgangsöffnung(en) ausgebildet ist,
wobei die Profilierung (2) einen nicht umgefalzten Verformungsbegrenzer für die Sicke (3) in der weiteren metallischen Lage (1') bildet,
**dadurch gekennzeichnet,**
**dass** der Übergangsbereich zwischen Wellentälern und Wellenbergen der Profilierung eine geringere Materialdicke als die Wellenberge/-täler aufweist.

2. Flachdichtung nach dem vorhergehenden Anspruch,
**dadurch gekennzeichnet, dass** zumindest die Lage (1), in der die Profiliernung (2) ausgebildet ist, aus einem Fedarstahl oder aus einem keitverformbaren, bei Temperierung aushärtenden Stahl besteht

3. Flachdichtung nach einem der vorhergehanden Ansprüche, **dadurch gekennzeichnet, dass** in einer weiteren metallischen Lage zumindest bereichsweise eine weitere wellenförmige Profilierung mit der Periodenlänge ≥ 1, um die Durchgangsöffnung ausgebildet ist, wobei beide Profilierungen zumindest bereichsweise unmittelbar aufeinander angeordnet sind.

4. Flachdichtung nach dem vorhergehenden Anspruch,
**dadurch gekennzeichnet, dass** die beiden Profilierungen unterchiedliche Abstände der Welienberge unterschiedliche Profilhöhe (Amplitude) und/oder unterschiedliche krümungsradien der Wellen aufweisen.

5. Flachdichtung nach einem der vorhergehenden Ansprüche,
**dadurch gekennzeichnet, dass** der Lage in der die Profilierung ausgebildet ist, eine weitere Lage benachbart ist, die in entsprechender Weise mit gleicher oder von dieser verschiedener Profilhöhe (Amplitude) und/oder Abstand der Wellenberge (Periode) profiliert ist.

6. Flachdichtung nach einem der vorhergehenden Ansprüche,
**dadurch gekennzeichnet, dass** an der Lage, in der die Profilierung ausgebildet ist, im Bereich der Profilierung zumindest teilweise längs das Umfangs der Durchgansöffnung zumindest bereichsweise ein Metallring als Stopper angeordnet ist.

7. Flachdichtung nach einem der vorhergehenden Ansprüche,
**dadurch gekennzeichnet, dass** die Profilhöhe (Amplitude) und/oder Adstände der wellenberge innerhalb der Profilierung (2) unterschiedlich sind.

8. Flachdichtung nach einem der vorhergehenden Ansprüche,
**dadurch gekennzeichnet, dass** die Wellenberge und/oder -täler abgeflacht sind.

9. Flachdichtung nach Anspruch 1,
**dadurch gekennzeichnet, dass** die Profilierung trapezförmig ist.

10. Flachdichtung nach einem der vorhergehenden Ansprüche,
**dadurch gekennzeichnet, dass** die Profilierung (2) der Welle bereichs- und/oder teilweise plastich verformt ist.

11. Flachdichtung nach einem der vorhergehenden Ansprüche,
**dadurch gekennzeichnet, dass** die Profilierung ohne Füllstoff ausgebildet ist.

12. Flachdichtung nach der vorhergehenden Ansprüche,
**dadurch gekennzeichnet, dass** die Anzahl der Wellen in unterschiedlichen Umfangsbereichen um eine Durchgangsöffnung unterschiedlich groß ist.

13. Flachdichtung nach einem der vohergehenden Ansprüche,
**dadurch gekennzeichnet, dass** die Profilhöhen und/oder die Abstände der Wellenberge der Profilierung (2) in verschiednen Umfangsbereichen um eine Durchgangsöffnung unterschiededlich groß sind.

14. Flachdichtung nach einem der vorhergehenden Ansprüche,
**dadurch gekennzeichnet, dass** in Wallentälem der Profilierung Stege vorhanden sind.

15. Flachdichtung nach einem der vorhergehenden Ansprüche,
**dadurch gekennzeichnet, dass** die Wellenberge und Wellentäler abgeflacht und/oder abgeplattet sind.

16. Flachdichtung nach einem der vorhergehenden Ansprüche,
**darduch gekennzeichnet, dass** die auf verschiedenen Seiten der Lage angeordneten Wellenberge/- täler eine unterchiedliche Formgebung, beispielsweise Höhe. Abstand, Form und dergleichen, und/oder Materialdicke aufweisen.

## Claims

1. Flat gasket comprising at least one first metal layer inwhich at least one through-hole is formed, a further metal layer (1') which is adjacent to the first metal layer (1) and in which at least one through-hole and at feast one bead (3) about the through-hole are formed, the first metal layer (1) itself being formed, at least in some regions on one side in the layer plane adjacent to the bead arranged in the further metal layer (1'), so as to have a wave-shaped profile (2) with a period length of ≥ 1.5 about the through opening(s), the profile (2) forming a non-crimped deformation limiter for the beading (3) in the further metal layer (1'), **characterised in that** the transition region between the wave troughs and the wave crests of the profile have a smaller material thickness than the wave crests/wave troughs.

2. Flat gasket according to the preceding claim, **characterised in that** at least the layer (1) in which the profile (2) is formed is composed of spring steel or a cold-workable steel which hardens upon tempering.

3. Flat gasket according to any one of the preceding claims, **characterised in that** at least in some regions of a further metal layer a further wave-shaped profile with a period length of ≥ 1 is formed about the trough-hole, both profiles being arranged, at least in some regions, so as to be directly above one another.

4. Flat gasket according to the preceding claim, **characterised in that** the two profiles have different distances between wave crests, different profile heights (amplitudes) and/or different radii of curvature of the waves.

5. Flat gasket according to any one of the preceding claims, **charaterised in that** the layer in which the profile is formed is adjacent to a further layer which is correspondingly profiled and has a profile height (amplitude) end/or distance between wave crests (period) which are the same or different.

6. Flat gasket according to any one of the preceding claims, **characterised in that** a metal ring is arranged as a stopper at least in some regions on the layer, in which the profile is formed, in the region of the profile at least in part about the circumference of the through-hole.

7. Flat gasket according to any one of the preceding claims, **characterised in that** the profile height (amplitude) and/or the distance between wave crests is different within the profile (2).

8. Flat gasket according to any one of the preceding claims, **characterised in that** the wave crests and/or wave troughs are flattened

9. Flat gasket according to claim 1, **characterised in that** the profile is trapezoidal.

10. Flat gasket according to any one of the preceding claims, **characterised in that** the profile (2) of the wave is plastically deformed in some parts or regions.

11. Flat gasket according to any one of the preceding claims, **characterised in that** the profile is formed without filler.

12. Flat gasket according to any one of the preceding claims, **characterized in that** the number of waves differs in different circumferential regions about a through-hole.

13. Flat gasket according to any one of the preceding claims, **characterised in that** the profile heights and/or the distances between wave crests of the profile (2) differ in different circumferential regions about a through-hole.

14. Flat gasket according to any one of the preceding claims, **characterised in that** webs are present in wave troughs of the profile.

15. Flat gasket according to any one of the preceding claims, **characterised in that** the wave crests and wave troughs are flattened and/or levelled.

16. Flat gasket according to any one of the preceding claims, **characterised in that** the wave crests/wave troughs arranged on different sides of the layer are shaped differently, for example have different heights, distances, shapes and the like and/or different material thicknesses.

## Revendications

1. Joint plat comprenant au moins une première couche métallique, dans laquelle est ménagée au moins une ouverture de passage ; une autre couche métallique (1') voisine de la première couche métallique (1) et dans laquelle sont ménagées au moins une ouverture de passage et au moins une moulure (3) autour de l'ouverture de passage,
dans lequel la première couche métallique (1) elle-même se présente au moins par segments sur un côté du plan de la couche adjacent à la moulure agencée dans l'autre couche métallique (1') sous la forme d'un profilé ondulé (2) d'une longueur de période ≥ 1,5 autour de la ou des ouvertures de passage,
dans lequel le profilé (2) forme un limiteur de déformation non replié pour la moulure (3) de l'autre couche métallique (1'), **caractérisé en ce que** la zone de transition entre les creux et les sommets des ondulations du profilé présente une épaisseur de matériau inférieure à celle des creux et des sommets des ondulations.

2. Joint plat selon la revendication précédente, **caractérisé en ce qu'**au moins la couche (1), dans laquelle le profilé (2) est formé, est constituée d'un acier à ressort ou d'un acier déformable à froid qui durcit lorsque la température s'équilibre.

3. Joint plat selon l'une quelconque des revendications précédentes, **caractérisé en ce qu'**une autre couche métallique présente, autour de l'ouverture de passage, au moins par segments, un autre profilé ondulé d'une langueur de période ≥ 1, les deux profilés étant agencés au moins par segments directement en s'appliquant l'un sur l'autre.

4. Joint plat selon la revendication précédente, **caractérisé en ce que** les deux profilés présentent différentes distances entre les sommets des ondulations, différentes hauteurs de profilé (amplitudes)et/ou différents rayons de courbure des ondulations.

5. Joint plat selon l'une quelconque des revendications précédentes, **caractérisé en ce qu'**une autre couche est voisine de la couche dans laquelle est formé le profilé, cette autre couche étant de manière correspondante profilée avec une hauteur de profilé (amplitude) identique ou différente et/ou une distance entre les sommets des ondulations (période) identique ou différente.

6. Joint plat selon l'une quelconque des revendications précédentes, **caractérisé en ce que**, sur la couche dans laquelle est formé le profilé, dans la zone du profilé, est agencé au moins en partie le long de la périphérie de l'ouverture de passage, au moins par segments, un anneau métallique comme butée.

7. Joint plat selon l'une quelconque des revendications précédentes, **caractérisé en ce que** la hauteur de profilé (amplitude) et/ou les distances entre les sommets des ondulations à l'intérieur du profilé (2) sont différentes.

8. Joint plat selon l'une quelconque des revendications précédentes, **caractérisé en ce que** les sommets et/ou les creux des ondulations sont aplatis.

9. Joint plat selon la revendication 1, **caractérisé en ce que** le profilé présente une forme trapézoïdale.

10. Joint plat selon l'une quelconque des revendications précédentes, **caractérisé en ce que** le profilé (2) de l'ondulation est soumis à une déformation plastique par segments et/ou en partie.

11. Joint plat selon l'une quelconque des revendications précédentes, **caractérisé en ce que** le profilé se présente sans charge.

12. Joint plat selon l'une quelconque des revendications précédentes, **caractérisé en ce que** le nombre des ondulations dans différentes zones périphériques autour d'une ouverture de passage est plus ou moins grand.

13. Joint plat selon l'une quelconque des revendications précédentes, **caractérisé en ce que** les hauteurs du profité et/ou les distances entre les sommets des ondulations du profilé (2) sont plus ou moins grandes dans différentes zones périphériques autour d'une ouverture de passage.

14. Joint plat selon l'une quelconque des revendications précédentes, **caractérisé en ce que** des nervures sont présentes dans des creux des ondulations du profile.

15. Joint plat selon l'une quelconque des revendications précédentes, **caractérisé en ce que** les sommets et les creux des ondulations sont aplatis et/ou aplanis.

16. Joint plat selon l'une quelconque des revendications précédentes, **caractérisé en ce que** les sommets/creux des ondulations agencés sur différents côtés de la couche présentent une conformation différente, par exemple en matière de hauteur, de distance, de forme et similaire, et/ou d'épaisseur de matériau.
